# EUROPEAN PATENT APPLICATION

(11) **EP 4 711 338 A1**
(43) Date of publication of application: **18.03.2026**
(21) Application number: 24200497.6
(22) Date of filing: 16.09.2024
(51) Int. Cl.: C01G 51/10, C01G 53/10, C22B 3/08, C22B 3/00

(54) **CONTROLLED AUTOCLAVE DISSOLUTION OF METAL POWDERS FOR PRODUCING HIGH-PURITY METAL SULFATE SOLUTIONS**

(71) Applicant: Umicore, 1000 Brussels (BE)
(72) Inventor: BOONE, Michael, Fort Saskatchewan, AB T8L 4K7 (CA); de KOCK, Felix, Fort Saskatchewan, AB T8L 4K7 (CA); FURRER, Rudy, Fort Saskatchewan, AB T8L 4K7 (CA); PRETORIUS, Patrius, Fort Saskatchewan, AB T8L 4K7 (CA); NEVEN, Margot, 2250 Olen (BE)
(74) Representative: Umicore RDI Patent Department

(57) **Abstract**

The present invention provides a controlled autoclave dissolution of metal powders for producing high-purity metal sulphate solutions, comprising the steps of:
a. reacting an aqueous slurry comprising a metal powder with sulphuric acid in an autoclave section comprising one or more autoclave reactors at a temperature between 100°C and 250°C, thereby forming a metal sulphate solution having a residual amount of metal powder, whereby the molar ratio of sulphuric acid and metal in said autoclave section is lower than 1.0; and
b. separating said metal sulphate solution from said residual metal powder.

## Description

### FIELD OF THE INVENTION

The present invention relates to a process of metal powder dissolution such as nickel or cobalt powder or mixture hereof for preparation of a metal sulphate product solution such as nickel sulphate product solution or cobalt sulphate product solution or a mixture thereof, as may be required for further downstream transport, purification and/or production activities.

### BACKGROUND

Base metal sulphates such as nickel or cobalt sulphate are useful for a number of applications such as, for example, a source of electrode material for batteries such as nickel-hydrogen and lithium-ion batteries. In this example end uses such as hybrid or full electric modes of transportation, mobile phones, personal computers, and the like are increasingly in demand.

One method of producing base metal sulphates such as nickel sulphate is by dissolving elemental nickel in sulfuric acid. This process requires a controlled environment as volatile hydrogen gas can be produced during the process, which may result in a hazardous environment. Additionally, the process of dissolving elemental nickel in aqueous solutions of acids is often impractically slow in most non-oxidizing acids and even in some oxidizing acids under certain conditions.

Another consideration in producing nickel sulphate is that the nickel sulphate solution to be used as a raw material in battery production should have a relatively high pH, for example, about 4. However, reaching a higher reaction rate of elemental nickel with sulfuric acid requires a sufficiently low pH (about 0.5 to about 2) when reacting under the exclusion of oxidizing agents.

US Patent 1,936,829 describes a process of making metal sulphates by dissolving nickel and other metallic constituents in Monel metal in sulphuric acid in the presence of oxygen. Elevated temperature and pressure is preferred and further, operating under pressure at temperatures above 100°C or as high as the boiling point of the mixture at the pressure maintained is preferred.

U.S. Patent No. 6,554,915, for example, describes a process of dissolving metallic nickel in a non-oxidizing aqueous acidic solution under conditions of temperature and relative motion between such elemental nickel and non-oxidizing acid as will result in spontaneous chemical reaction between them. The process requires the use of an additional oxidizing agent, and the temperature of the reaction mixture of liquid acid and solid nickel preferably is room temperature at the start of dissolution and raised to a final value of at least 65°C but a maximum to about 95°C and maintained at that temperature for several hours.

U.S. Patent 7,364,717 B2 , for example, describes a process for converting bulk nickel metal (particles greater than 0.1 mm) to nickel sulphate and water comprising at least one enclosed reactor, preferably a reactor column to which bulk nickel and sulphuric acid are supplied and oxygen introduced wherein the aqueous acidic solution is maintained within a pH range of about 0.1 and 6.0 with at least one of the reactors maintained at a temperature of 20°C to 100°C. The process does not generate hydrogen gas. Further U.S. Patent 7,799,296 describes providing an oxygen enriched acidic solution to the reaction vessel in which the nickel containing metal is present.

Patent WO 2019/090389 describes a process for making a sub-saturated nickel sulphate solution that is about 70% to about 99% of the theoretical nickel sulphate saturation concentration with a final pH from about 0 to about 4 from nickel powder by leaching a stochiometric excess of the nickel powder with initially from about 150 g/L and about 350 g/L sulphuric acid for a period of about 2 to about 30 hours at a process temperature of from about 50°C to about 100°C and at about atmospheric pressure or at a positive gauge pressure. The process comprises the step of oxidizing the non-nickel metal impurities in the discharge solution and separating the acidic sub-saturated nickel sulphate solution from the non-leached nickel powder to provide a discharge solution which is substantially solids-free acidic sub-saturated nickel sulphate solution. Further, the process comprises the step of removing hydrogen gas evolved during the process by flushing with steam and/or by operating the process at a positive gauge pressure to prevent air ingress and/or carrying out the process under a nitrogen blanket. The process is preferably a batch process.

Patent No. WO 2020/129396 describes a process to dissolve nickel briquettes in a two-step process comprising placing nickel briquettes, sulfuric acid and water in step one to dissolve the nickel briquettes to obtain a primary nickel sulphate solution followed by step two that comprises adding additional nickel briquettes to reduce the free acid in the primary nickel sulphate solution.

Another consideration in producing nickel sulphate solution is the potential of a passivation layer forming (NiOOH) that hinders further dissolution. U.S. Patent 2022/0411280 describes a process comprising the addition of hydrogen peroxide progressively into the aqueous sulphuric acid solution containing the metal particles to remove the passivation layer.

Patent No. WO 2023/006929, for example, describes a process for preparing a nickel sulphate product solution, the process comprising: introducing elemental nickel, sulfuric acid, and water into a primary vessel such as a bubble column or trickle bed reactor to form a primary nickel sulphate solution; transferring the primary nickel sulphate solution from the primary vessel to a secondary vessel and adding additional elemental nickel, wherein the secondary vessel collects unreacted nickel and allows the primary nickel sulphate solution to further react with any unreacted nickel to form a secondary nickel sulphate solution; collecting a high purity hydrogen off-gas flow from the primary vessel and/or the secondary vessel; and filtering the secondary nickel sulphate solution to collect the nickel sulphate product solution.

Patent application CA 3211556 describes a process for preparing a neutralized nickel sulphate solution that is 120 to 140 g/L nickel concentration comprising leaching nickel cathode in sulphuric acid under temperature of from 170°C to 200°C acid and high pressure. The process uses oxygen gas or nitrogen gas in the leaching step. The leachate produced above is neutralized with nickel powder or recycled nickel powder cake from a filtration step following the neutralization step. The total reaction time provided in the examples cited under the above-mentioned conditions was 24 hours.

The method of producing nickel sulphate solution by dissolving elemental nickel in aqueous solutions of acids is often impractically slow for economical commercial operation.

Accordingly, there is a need for alternative processes and configurations to produce metal sulphate product solutions from base metals with benefits such as:
a) Operates safely;
b) Allows for monitoring of all key operating parameters under all operating modes such as batch or continuous operation;
c) minimizes or eliminates reagent use such as the need for oxygen or nitrogen gases;
d) scalable, for example to larger commercial operations;
e) has high circuit utilization such as greater that 90% on-stream time avoiding frequent shutdowns, planned or unplanned for reasons such as clean-out to remove dissolution residue;
f) is flexible allowing for example either batch or continuous operation without detriment to its other benefits;
g) is flexible allowing for operation below or above atmospheric pressure, by which the boiling point of the leach solution varies;
h) is flexible allowing for dissolution of metal powder that are characteristically different, including different reaction rates, without requiring significant equipment or operational modifications;
i) is flexible in allowing for recover and use of energy such as heat by the recycle of flashed steam when operating at high temperatures and pressures;
j) promotes rapid dissolution of feed metal powder;
k) favours high nickel sulphate concentrations in the leachate for example, by avoiding the generation of water;
l) allows for the use or reuse of all output streams, including the reuse of undissolved metal

The present disclosure is directed to processes and configurations for dissolving elemental base metals such as nickel or cobalt to produce nickel or cobalt sulphate product solutions.

### SUMMARY

The present invention aims to address one or more of the aforementioned needs by providing a process for preparation of a metal sulphate solution, comprising the steps of:
a. reacting an aqueous slurry comprising a metal powder with sulphuric acid in an autoclave section comprising one or more autoclave reactors at a temperature between 100°C and 250°C, thereby forming a metal sulphate solution having a residual amount of metal powder, whereby the molar ratio of sulphuric acid and metal in said autoclave section is lower than 1.0; and
b. separating said metal sulphate solution from said residual metal powder.

The inventors identified that the inventive process allows for safe production of nickel or cobalt sulphate solutions without need for aggressive oxidizing agents.

### DESCRIPTION OF FIGURES

Figure 1 depicts a batch processing method in stirred tank reactors for producing nickel sulfate product solution, where metallic nickel and acid solution are charged into a reactor, followed by discharge for downstream processing or settling before decanting the product solution.
Figure 2 illustrates a cross-flow process in continuous stirred tank reactors (CSTRs) for nickel sulfate production, with stratification to produce overflow solution free of metallic nickel, while maintaining a reaction bed by adding nickel directly to each reactor.
Figure 3 shows a series of CSTRs for continuous dissolution of nickel sulfate product solution, where acid solution and powder flow from one reactor to the next, achieving full suspension of solid powder.
Figure 4 shows a horizontal autoclave for performing a process according to Figure 3.
Figure 5 shows a flowsheet for operating a process according to the present invention.

### DETAILED DESCRIPTION OF THE INVENTION

As used herein and in the claims, the terms and phrases set out below have the following definitions.
1. "Continuous Stirred Tank Reactor" or "CSTR" refers to a continuously fed and continuously stirred tank reactor or a continuously fed and continuously stirred compartment in a reactor.
2. "Stirring" or "stirred" refers to intimate high shear mechanical mixing of two or more components of a mixture or slurry with one or more impellers or agitators to obtain a generally uniform distribution and suspension of the components.
3. "Slurry" refers to a liquid medium such as water, in which solid particles, such as nickel powder, are generally uniformly suspended therein, generally by means of agitation, such as mechanical stirring.
4. Batch process refers to where all the reactants are added at once and the reaction proceeds until completion or to a predetermined state.
5. Semi-batch process refers to where some of the reactants are added initially, and the rest are added gradually during the reaction until completion or to a predetermined state.
6. Continuous process refers to where the reactants are continuously fed and the products are continuously removed.
7. "Autoclave reactor" refers to a stirred cylindrical reactor in either horizontal or vertical orientation with one or more agitated and joined compartments operated at elevated temperature and pressure in relation to ambient pressure and/or temperature.
8. "Overpressure" refers to operating above the water vapour pressure of the contained solution within the autoclave reactor at temperature.
9. "Flash tank" refers to the main vessel for depressurizing the metal sulphate solution containing any non-leached elemental nickel wherein overhead vapour contains predominantly steam is released and the said solution cools.
10. "Autoclave section" refers to one or more autoclave reactors operated in series or parallel.

A process is provided for dissolution of elemental base metals such as nickel as powder or aggregates of nickel powder in a sulfuric acid solution to prepare separate streams of a nickel sulphate liquid and a vapour stream containing hydrogen gas.

When in this text the word 'nickel' is used, a skilled person knows that this process can also be executed when using cobalt.

In a first aspect, the present invention provides a process for preparing a metal sulphate solution, comprising the steps of:
a. reacting an aqueous slurry comprising a metal powder with sulphuric acid in an autoclave section comprising one or more autoclave reactors at a temperature between 100°C and 250°C, thereby forming a metal sulphate solution having a residual amount of metal powder, whereby the molar ratio of sulphuric acid and metal in said autoclave section lower than 1.0; and
b. separating said metal sulphate solution from said residual metal powder.

The inventive process is particularly suitable for industrial-scale applications where efficiency, safety, and high purity are essential. In the first step, an aqueous slurry that contains a finely divided metal powder is reacted with sulfuric acid. This reaction takes place within the autoclave section, which consists of one or more autoclave reactors with one or more compartments. The reactors are operated at an elevated temperature, specifically within the range of 100°C to 250°C, to promote efficient dissolution of the metal powder into the sulfuric acid, thereby forming a metal sulphate solution. A notable feature of this process is the controlled ratio of sulfuric acid to metal within the autoclave section, which is maintained below 1.0. This low ratio is advantageous as the amount of sulfuric acid required is almost completely used in the leaching reaction of the metal, thereby lowering operational costs due to minimizing the generation of waste acid, or the need for basifying the excess sulphuric acid. After the reaction, the metal sulphate solution, which still contains a residual amount of undissolved metal powder, is separated from this residual powder. This separation step is critical for ensuring that the metal sulphate solution is free from solid impurities, making it suitable for further processing, such as crystallization or purification.

In a preferred embodiment, the present invention provides a process according to the first aspect of the invention, whereby said metal powder is introduced into said autoclave section as an aqueous slurry comprising said metal powder and water. The inventors found that the metal powder can be safely introduced in a continuously operating autoclave reactor when comprised as an aqueous slurry. Whereby said metal powder is introduced into said autoclave section as an aqueous slurry consisting exclusively of said metal powder and water. Said aqueous slurry comprising elemental metal powder may be prepared in a fluidization reactor. Said residual amount of elemental metal powder may be recycled to said fluidization reactor, preferably to a stirred fluidization tank.

In a preferred embodiment, the present invention provides a process according to the first aspect of the invention, whereby said aqueous slurry comprising a metal powder is reacted with sulphuric acid in step a. under reducing conditions, preferably in absence of an oxidizing agent. This choice of operating conditions is significant because it avoids the need for oxygenation, which is not only an additional operational expense but also poses potential safety risks due to the possible interaction between oxygen and hydrogen. By eliminating oxygen, the process reduces the risk of explosive gas mixtures forming, thus improving the overall safety of the operation.

In a preferred embodiment, the present invention provides a process according to the first aspect of the invention, whereby said autoclave reactor is configured as a multicompartment autoclave reactor, which includes a sequence of reaction zones. This design allows for a more controlled and staged reaction process, where the sulfuric acid concentration gradually decreases in the different stages to optimize the dissolution of the metal powder. Such a setup enhances the efficiency of the reaction and ensures a more complete conversion of the metal powder to the sulphate form. Alternatively, the autoclave section may comprise a single-compartment reactor, which is suitable for batch operations. In this configuration, the entire reaction occurs in one compartment, making it simpler to operate and maintain, particularly for smaller-scale or less continuous processes.

In a preferred embodiment, the present invention provides a process according to the first aspect of the invention, whereby said metal sulphate solution having a residual amount of metal powder is evacuated from said autoclave reactor prior to or subsequent to the step of separating said metal sulphate solution from said residual metal powder, step b.

In a preferred embodiment, the present invention provides a process according to the first aspect of the invention, whereby unreacted metal powder recovered in step b. is recycled upstream, preferably recycled to a tank for preparing a slurry of metal powder in water.

In a preferred embodiment, the present invention provides a process according to the first aspect of the invention, whereby the process is carried out at a process temperature of from about 100°C to about 140°C, more preferably from about 110°C to about 130°C, most preferably at about 120°C. Operating within this temperature range ensures that the metal powder dissolves efficiently without causing excessive wear on the equipment or requiring excessive energy inputs.

In a preferred embodiment, the present invention provides a process according to the first aspect of the invention, wherein the process is carried out at a process overpressure preferably no more than 8 times the steam partial pressure. More preferably, the pressure is maintained between 0.5 and four times the steam partial pressure, with the most optimal condition being approximately 1.5 times the steam partial pressure. These pressure settings are critical for maintaining the solubility of gases within the reaction mixture, ensuring a smooth and controlled reaction process.

In a preferred embodiment, the present invention provides a process according to the first aspect of the invention, whereby said autoclave section comprises a horizontal autoclave reactor comprising a multitude of reactor compartments. Preferably, said process is operated under continuous flow conditions. This configuration is ideal for large-scale operations where the process can run uninterrupted, maximizing throughput and operational efficiency. The continuous flow ensures that the metal powder is steadily fed into the reactor, and the metal sulphate solution is continuously removed, providing a consistent product output. Alternatively, the present invention provides a process according to the first aspect of the invention, whereby said autoclave section comprises an autoclave reactor comprising one single reactor compartment. Such processes may be operated under batch conditions. This setup is simpler and more suited to smaller-scale operations or scenarios where precise control over each batch is required. Batch operations offer the advantage of greater flexibility in handling different feedstocks or adjusting the process parameters for each batch.

In a preferred embodiment, the present invention provides a process according to the first aspect of the invention, whereby said metal powder has an average particle size D50 of at most 1 mm, more preferably less than 600 µm and most preferably between 50 and 200 µm, as determined by ASTM B214. Fine particles offer a larger surface area for reaction, leading to faster and more complete dissolution in the sulfuric acid, which is crucial for the efficiency and consistency of the process.

During the reaction, gaseous by-products, including hydrogen, are generated. These gases must be carefully managed to prevent pressure buildup and ensure safe operation. In a preferred embodiment, the present invention provides a process according to the first aspect of the invention, whereby a vapour stream including hydrogen and other gases is evacuated from said one or more autoclave reactors. This stream can be processed to recover valuable hydrogen or safely vented depending on the specific process requirements and environmental considerations.

In a preferred embodiment, the present invention provides a process according to the first aspect of the invention, whereby the metal sulphate solution having a residual amount of metal powder which is evacuated from said autoclave reactor and is transferred to a separation tank, preferably a flash tank.

In a preferred embodiment, the present invention provides a process according to the first aspect of the invention, whereby the metal powder is produced from grinding metal briquettes. The metal powder used in this process may be produced by grinding metal briquettes, ensuring consistency in particle size and purity. The preferred metals are nickel and cobalt, which can be used individually or as a mixture, depending on the desired final product. The process is particularly advantageous for industries requiring high-purity nickel or cobalt sulphate solutions, such as battery manufacturing, electroplating, and catalyst production.

In a preferred embodiment, the present invention provides a process according to the first aspect of the invention, whereby said metal powder is nickel powder or cobalt powder or mixture thereof.

In a preferred embodiment, the present invention provides a process according to the first aspect of the invention, whereby said metal is nickel or cobalt, and whereby the molar ratio of sulphuric acid and said metal in said autoclave compartment is lower than 1.0, preferably lower than 0.8, and more preferably lower than 0.5.

In a preferred embodiment, the present invention provides a process according to the first aspect of the invention, whereby heating the feed slurry to a target reaction temperature for dissolution, for example by passing through one or more heating devices such as a heat exchanger and/or a natural gas, fuel gas, or electric heater.

In a preferred embodiment, the present invention provides a process according to the first aspect of the invention, whereby feeding the nickel sulphate solution and any non-leached elemental nickel from the first reaction zone to a second reaction zone comprising a second continuous stirred reaction volume maintained at the same or different dissolution conditions as in the first reaction zone to achieve further consumption of the sulphuric acid and to produce a volatile vapour stream including hydrogen and other gases, and carrying the volatile vapour stream upwardly with the hydrogen in the second reaction zone to produce an overhead vapour stream.

In a preferred embodiment, the present invention provides a process according to the first aspect of the invention, whereby feeding the elemental metal slurry to the second reaction zone to achieve further consumption of the sulphuric acid.

In a preferred embodiment, the present invention provides a process according to the first aspect of the invention, whereby the dissolution of the metal powder proceeds until the pregnant leach solution has a free acid of from about 0 to about 30 g/L, more preferably a free acid of about 2 to about 15 g/L, most preferably a free acid concentration of about 10 g/L.

Further steps to enhance the process may be included. For example, the feed slurry can be preheated to the target reaction temperature using heat exchangers or heaters powered by natural gas, fuel gas, or electricity. Additionally, the metal sulphate solution and any unreacted metal from the first reaction zone may be transferred to a second reaction zone to further consume the sulfuric acid and optimize the final product yield. This second stage can operate under similar or different conditions to maximize the efficiency and completeness of the reaction.

The process as described above may be further enhanced by applying one or more measures as described in the following.

The process may comprise one or more of the following steps:
a) stirring a slurry of elemental nickel of suitable size distribution to form a pumpable slurry;
b) heating the feed slurry to a target reaction temperature for dissolution; for example by passing through one or more heating devices such as a heat exchanger and/or a natural gas, fuel gas, or electric heater.
c) feeding the slurry to a first reaction zone comprising a first stirred reaction volume, in the absence of oxygen, maintained at above ambient temperature and pressures; preferably between 2 and 50 bar; while introducing sulphuric acid to the first reaction zone to achieve rapid dissolution of the elemental nickel in the slurry and to produce a vapour stream including hydrogen and other gases and carrying the volatile vapour stream upwardly with the hydrogen in the first reaction zone to produce an overhead vapour stream;
d) optionally feeding the elemental nickel slurry from the first reaction zone to a second reaction zone comprising a second stirred reaction zone maintained at the same or different dissolution conditions as in the first reaction zone, while optionally introducing elemental nickel to the second reaction zone to achieve further consumption of the sulphuric acid and to produce a volatile vapour stream including hydrogen and other gases, and carrying the volatile vapour stream upwardly with the hydrogen in the second reaction zone to produce an overhead vapour stream;
e) optionally feeding the further elemental nickel slurry from the second reaction zone to one or more further reaction zones connected in series, each further reaction zone comprising a further stirred reaction volume maintained at same or different dissolution conditions as in the first and second reaction zones, while optionally introducing elemental nickel slurry to each of the one or more further reaction zones to achieve further dissolution of elemental nickel and to reduce in each further reaction zone the amount of residual acid and to produce further a volatile vapour stream including hydrogen and other gases, and carrying the volatile vapour stream upwardly with the hydrogen in each of the one or more further reaction zone to produce a further overhead vapour stream;
f) removing the overhead vapour stream from the first, second and any of the one or more further reaction zones;
g) optionally removing the further dissolved nickel in solution from the first reaction zone or from the last of the one or more further reaction zones to provide a nickel sulphate product solution;
h) reducing the pressure of the nickel sulphate product solution to produce a volatile vapour stream including hydrogen and other gases, and a nickel sulphate product solution including, non-leached elemental nickel;
i) separating the non-leached elemental nickel from the nickel sulphate product solution to produce a nickel sulphate product solution stream through one or more solid liquid separation steps; such as filtration, centrifugation or decantation, thereby using for example a centrifugal separator, magnetic filter and polish filter;
j) optionally recycling and reusing the non-leached elemental nickel;
k) optionally recycling and reusing the overhead vapour stream;
l) optionally cooling the overhead vapour stream and subjecting the vapour stream to a gas liquid separation step to produce a gas stream including hydrogen and other gases and a liquid stream;
m) optionally subjecting the overhead vapour to a hydrogen recovery and purification step to produce a higher purity hydrogen gas stream;
n) optionally recycling and reusing the hydrogen and other gases stream;
o) optionally recycling and reusing the liquid stream.

This process can be carried out in batch, semi-batch or continuous mode wherein the feeding of said aqueous slurry and sulphuric acid is dosed in batch, semi-batch or continuous way and the removal of the nickel sulphate solution containing any non-leached elemental nickel and the overhead vapour stream is done in a batchwise, semi-batch and/or continuous way. The resulting Ni sulphate solution has a final Ni concentration between 60 and 180 g/L, most preferably of 130 g/L.

The reaction zone or reaction zones are maintained within a pressure vessel, most preferably with each reaction zone maintained within a single compartment of a pressure vessel such as a horizontal multicompartment autoclave.

Reducing the temperature of the metal sulphate solution and the pressure of the metal sulphate product solution can be done in the pressure vessel itself in a batch or semi-batch execution of the process. When working in continuous mode the pressure and temperature is most preferably released in a flash tank where a volatile vapour stream including hydrogen and other gases such as water vapour is produced. The metal sulphate product solution is most preferably tapped off from the flash tank. The unreacted metal powder particles aggregate as a slurry at the bottom of the flash tank.

Notable features of some embodiments of the process are set out below.
a) Ability to operate in both batch, semi-batch and continuous operation;
b) Ability to selectively add nickel powder or sulphuric acid to different areas of the reaction zone;
c) Ability to selectively add nickel powder or sulphuric acid to any or all reaction zones;
d) Reduced cycle times for batch and semi-batch operation or higher capacity/ throughput for continuous operation;
e) Control of residual acid in nickel sulphate product stream;
f) Greater control of gas phase separation purity deportment;
g) Capture of gas phase as useable by-product following further purification such as the ability to provide vapour stream under pressure for purification;
h) Ability to operate within a more favourable regime of the reaction kinetics;
i) Ability to operate within a safe window above the upper explosion limit (UEL) of hydrogen;
j) Greater dispersion of liquid reagents through solid particles enhancing solid-liquid contact;
k) Reduction in potential crud or solids residue from improved extents of metal dissolution;
l) Reduction in particulate foam formation; and
m) Ability to process powders with varying dissolution kinetics.

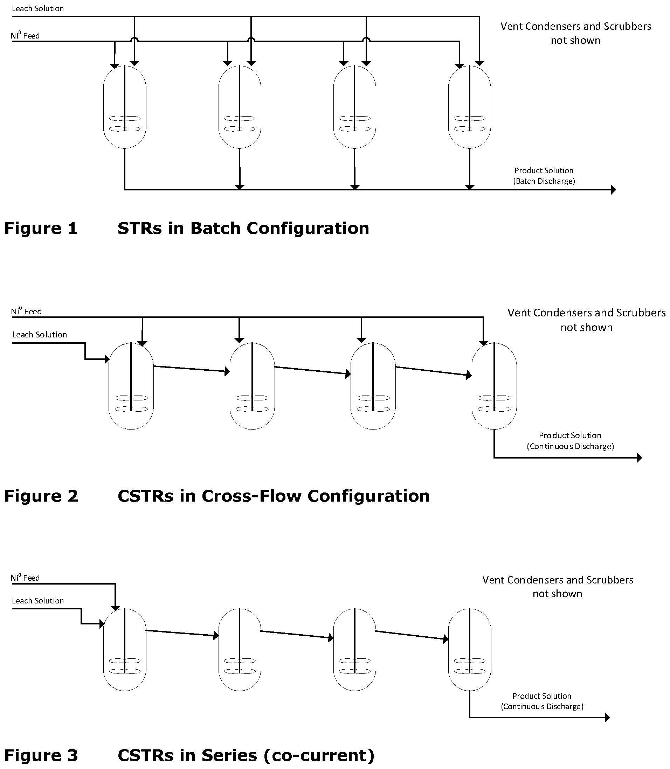

Exemplary embodiments of the process are shown in flow diagrams FIGS 1, 2, 3, 4 and 5.

Figure 1 shows an embodiment of the process to produce nickel sulphate product solution by batch processing in stirred tank reactors. In this mode, metallic nickel and acid solution is charged into a reactor (which may be under pressure) for a set period of time. Afterward, the entire content of the reactor is discharged for downstream processing. Alternatively, agitation may be halted thereby allowing the residual metallic nickel to settle in the reactor before the product solution is decanted away from the solids. Multiple batch reactors may be installed in parallel to improve integration with preceding and subsequent unit operations. The number of parallel reactors can be balanced with the surge capacity prior to and following the batch operation.

Figure 2 shows an embodiment of the process to produce nickel sulphate product solution by cross-flow in continuous stirred tank reactors (CSTRs). In this mode acid solution cascades through a series of CSTRs. In these reactors, agitation is off-bottom, which would result in stratification in each reactor to produce an overflow solution, essentially free of metallic nickel, to the subsequent CSTR. Metallic nickel is added directly to each reactor to maintain a reaction bed.

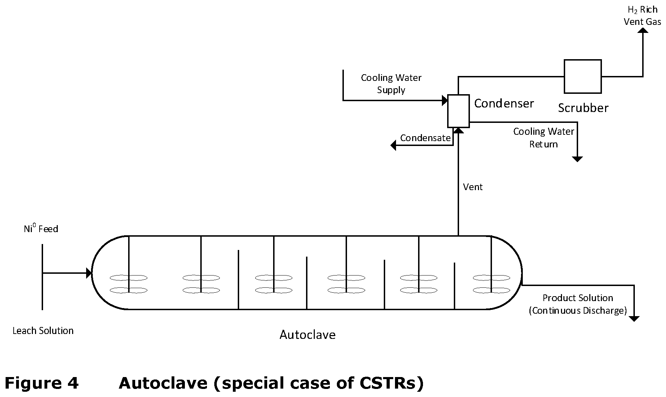

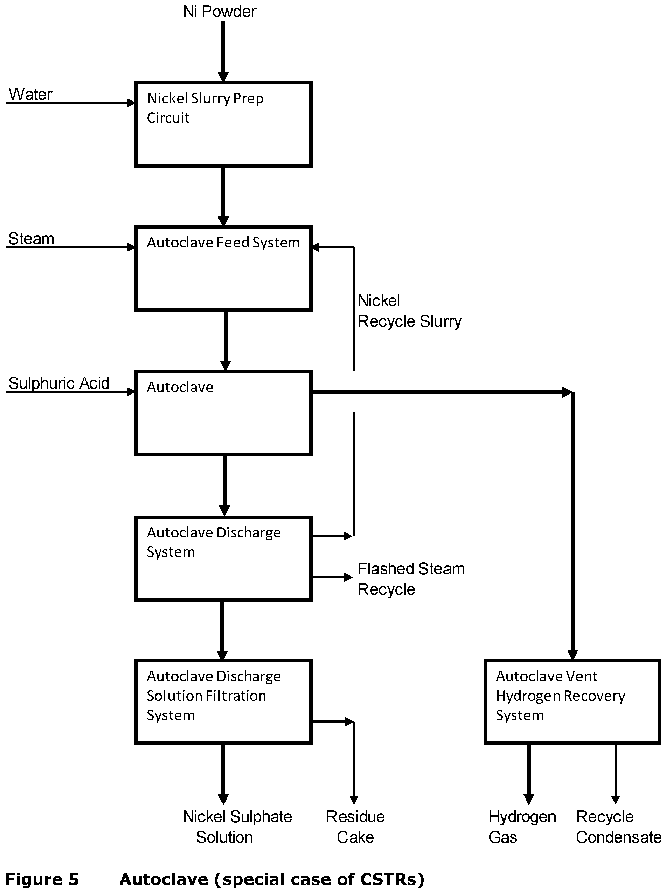

Figure 3 shows an embodiment of the process to produce nickel sulphate product solution (CSTRs in series). In this mode acid solution and powder is fed to the first in a series of continuous stirred tank reactors, which overflows to subsequent reactors for continuous dissolution. Agitation is sized to achieve full suspension of the solid powder in the acid solution. A special case of series of stirred tank reactors, shown in FIG 4 is a horizon autoclave, which is suitable for the continuous dissolution of nickel powder. Further, a special case incorporating an autoclave into a commercial flowsheet is shown in FIG 5.

Based on experimental testing, modelling and experience with commercial multi-compartmental stirred autoclaves, the following may be achieved in some embodiments of the process:
a. Operates safely such as above the UEL for hydrogen;
b. Allows for monitoring of all key operating parameters under all operating modes such as batch or continuous operation;
c. scalable, for example to larger commercial operations;
d. has high circuit utilization such as greater that 90% on-stream time avoiding frequent shutdowns, planned or unplanned for reasons such as clean-out to remove dissolution residue;
e. is flexible allowing for example either batch or continuous operation without detriment to its other benefits;
f. is flexible allowing for operation below or above atmospheric pressure, e.g. the boiling point of the leach solution including but not limited to mild conditions, such as with temperature in the range of 100°C to 130°C, pressure in the range of 1 to 5 bar;
g. is flexible allowing for dissolution of metal powder of characteristically different reaction rates without requiring significant equipment or operational modifications;
h. is flexible in allowing for recover and use of energy such as heat by the recycle of flashed steam when operating at high temperatures and pressures;
i. promotes rapid dissolution of feed metal powder;
j. favours high nickel sulphate concentrations in the leachate for example;, by avoiding the generation of water; and
k. allows for the use or reuse of all output streams.

### EXAMPLES

The following examples provide experimental evidence for the present invention and are presented to illustrate and demonstrate specific features or conditions for the practice of this invention and should not be interpreted as a limitation upon the scope of that invention. Operating paraments, for example temperature, residence time, nickel powder particle size, metal to acid ratio were tested under both batch and semi-continuous operation.

Nickel dissolution tests were conducted in a jacketed glass reactor capable of full suspension agitation and operating at pressures and temperatures of 10 bar and 225 °C, respectively. The reactor temperature was maintained with an oil-filled circulating heating bath and the pH was measured during the complete test. Acid was added to the reactor using a pump. Gaseous reaction products were removed from the reactor via a vent line equipped with a gas sampling port. Reactor pressure was maintained using a back pressure regulator. Liquid samples were collected using a dip tube immersed in the reactor contents. This sample line was also equipped with a gas inlet that allowed for the system to be pressurized with N2.

### EXAMPLE 1

Example 1 represents a semi-batch operation in which sulphuric acid is continuously added to the setup while keeping the concentration of sulphuric acid constant. The setup is initially charged with 260 g nickel powder with a particle size between 106 and 125 µm and 1000 g reverse osmosis water. The setup was pressurized to 300 kPa total pressure and heated to 120 °C. Thereafter the addition of sulfuric acid was started and aimed to keep the acid concentration constant around 10 g/L H₂SO₄. The results are summarized in Table 1 where Time 0 refers to start time of sulphuric acid addition.

**Table 1: Dissolution test with nickel powder with continuous sulphuric acid addition.**

| | | Sample Time, min | | | | | | | |
|---|---|---|---|---|---|---|---|---|---|
| | | 15 | 30 | 60 | 120 | 180 | 240 | 300 | DX3 |
| Solution Analyses | | | | | | | | | |
| | Ni, g/L | 2.24 | 3.55 | 7.83 | 21.5 | 33.9 | 43.0 | 49.9 | 52.1 |
| | H₂SO₄ | 2.60 | 2.20 | 6.30 | 13.6 | 16.0 | 16.0 | 16.0 | 9.70 |
| | pH (hot)¹ | 2.80 | 2.70 | 2.50 | 2.40 | 2.40 | 2.40 | 2.50 | -- |
| | pH (cold)² | 1.82 | 1.72 | 1.57 | 1.40 | 1.29 | 1.26 | 1.25 | 1.37 |
| | Acid (96% H₂SO₄) Added, g | 6.89 | 10.7 | 21.0 | 49.8 | 71.4 | 84.7 | 94.2 | -- |
| | | | | | | | | | |
| Leaching rate, g/kg·h | | -- | 20.2 | 32.9 | 52.6 | 47.7 | 35.0 | 26.5 | -- |
| Leaching rate cumulative, g/kg·h | | 38.4 | | | | | | | |

| | | | | | | | | | |
|---|---|---|---|---|---|---|---|---|---|
| ¹ pH measured *in situ* at 120°C ² pH measured on sample filtrate at 20°C ³ Analysis on the final solution after the test | | | | | | | | | |

### EXAMPLE 2

Example 2 represent a batch operation in which the complete amount of sulphuric acid was charge at once. The setup is initially charged with 260 g nickel powder with a particle size between 106 and 125 µm and 1000 g reverse osmosis water. The setup was pressurized to 300 kPa total pressure and heated to 120 °C. Thereafter 226 g of 96% sulfuric acid was added and the H₂SO₄ concentration was measured by sampling over time. The results are summarized in Table 2 where Time 0 refers to start time of sulphuric acid addition.

**Table 2: Dissolution test with nickel powder with initial charge of sulphuric acid.**

| | Sample Time, min | | | | | | | | |
|---|---|---|---|---|---|---|---|---|---|
| | 0 | 15 | 30 | 60 | 90 | 120 | 150 | 180 | DX³ |
| Solution Analyses | | | | | | | | | |
| Ni, g/L | 55.1 | 86.7 | 97.1 | 110.0 | 118.0 | 123.0 | 123.0 | 123.0 | 124.0 |
| H2SO4 | 112.5 | 66.5 | 46.3 | 21.7 | 12.9 | 6.65 | 5.40 | 4.10 | 1.20 |
| pH (hot)1 | 2.05 | 2.23 | 2.46 | 2.87 | 3.13 | 3.33 | 3.47 | 3.56 | - |
| pH (cold)2 | 0.76 | 0.79 | 0.82 | 0.97 | 1.10 | 1.25 | 1.38 | 1.44 | 1.75 |
| Acid (96% H2SO4) Added, g | 226.0 | -- | -- | -- | -- | -- | -- | -- | -- |
| | | | | | | | | | |
| Leaching rate, g/kg·h | -- | 486.2 | 160.0 | 99.2 | 61.5 | 38.5 | 0.000 | 0.000 | -- |
| Leaching rate cumulative, g/kg·h | 236.5 | | | | | | | | |

| | | | | | | | | | |
|---|---|---|---|---|---|---|---|---|---|
| ¹ pH measured *in situ* at 120°C ² pH measured on sample filtrate at 20°C ³ Analysis on the final solution after the test | | | | | | | | | |

## Claims

1. A process for preparing a metal sulphate solution, comprising the steps of:
a. reacting an aqueous slurry comprising a metal powder with sulphuric acid in an autoclave section comprising one or more autoclave reactors at a temperature between 100°C and 250°C, thereby forming a metal sulphate solution having a residual amount of metal powder, whereby the molar ratio of sulphuric acid and metal in said autoclave section is lower than 1.0; and
b. separating said metal sulphate solution from said residual metal powder.

2. Process according to claim 1, whereby said metal powder is introduced into said autoclave section as an aqueous slurry comprising said metal powder and water.

3. Process according to claim 1 or 2, whereby said aqueous slurry comprising a metal powder is reacted with sulphuric acid in step a. under reducing conditions, preferably in absence of an oxidizing agent.

4. Process according to any of claims 1 to 3, whereby said metal sulphate solution having a residual amount of metal powder is evacuated from said autoclave reactor prior to or subsequent to step b.

5. Process according to any of claims 1 to 4, whereby unreacted metal powder recovered in step b. is recycled upstream, preferably recycled to a tank for preparing a slurry of metal powder in water.

6. Process according to any of claims 1 to 5, whereby the process is carried out at a process temperature of about 100°C to about 140°C.

7. Process according to any of claims 1 to 6, wherein the process is carried out at a process overpressure preferably no more than 8 times the steam partial pressure, more preferably from about 0.5 to about 4 times the steam partial pressure.

8. Process according to any of claims 1 to 7, whereby said autoclave section comprises one or more horizontal autoclave reactor comprising a multitude of reactor compartments.

9. Process according to any of claims 1 to 8, whereby said metal powder has an average particle size D50 of at most 1 mm, as determined by ASTM B214.

10. Process according to any of claims 1 to 9, whereby a vapour stream including hydrogen and other gases is evacuated from said one or more autoclave reactors.

11. Process according to any of claims 1 to 10, whereby the metal sulphate solution having a residual amount of metal powder which is evacuated from said autoclave reactor and is transferred to a separation tank, preferably a flash tank.

12. Process according to any of claims 1 to 11, whereby the metal powder is produced from grinding metal briquettes.

13. Process according to any of claims 1 to 12, whereby said metal powder is nickel powder or cobalt powder or a mixture thereof.

14. Process according to any of claims 1 to 13, whereby said metal is nickel or cobalt, and whereby the molar ratio of sulphuric acid and said metal in said autoclave section is lower than 1.0, preferably lower than 0.8.

15. Process according to any of claims 1 to 14, whereby the dissolution of the metal powder proceeds until the pregnant leach solution has a free acid concentration of about 0 to about 30 g/L, more preferably a free acid concentration of about 2 to about 15 g/L.

16. Process according to any of claims 1 to 15, whereby said autoclave section comprises one single autoclave reactor configured as a multicompartment autoclave reactor.

17. Process according to any of claims 1 to 16, whereby said autoclave section comprises one or more autoclave reactors, each comprising one single reactor compartment.
